# EUROPEAN PATENT APPLICATION

(11) **EP 4 692 621 A1**
(43) Date of publication of application: **11.02.2026**
(21) Application number: 23932139.1
(22) Date of filing: 07.11.2023
(51) Int. Cl.: F16L 11/12, F16L 11/133, F17D 5/06, G01F 23/18, G01F 23/292, G01M 3/28

(54) **MARINE HOSE MONITORING SYSTEM AND METHOD**

(30) Priority: 07.04.2023 JP 2023062780
(71) Applicant: The Yokohama Rubber Co., Ltd., Hiratsuka-shi, Kanagawa 254-8601 (JP)
(72) Inventor: ISHIBASHI Yusuke, Hiratsuka-shi, Kanagawa 254-8601 (JP)
(74) Representative: Grünecker Patent- und Rechtsanwälte PartG mbB
(86) International application number: PCT/JP2023/040076
(87) International publication number: WO 2024/209729

(57) **Abstract**

A system and a method for monitoring capable of stably positioning a drone at an upper position close to an IC tag when performing wireless communication between a passive IC tag installed in a marine hose and a communication unit installed in the drone are provided. Installing a communication unit (17), a pressure altimeter (22), and a laser altimeter (23) in a drone (19), moving the drone (19) to an airspace above a marine hose (1) at an altitude of 10 m or more and 20 m or less, and when performing wireless communication between the communication unit (17) and an IC tag (11) installed in the floating type marine hose (1), moving the drone (19) downward to bring the IC tag (11) and the communication unit (17) close to each other, calculating the altitude of the drone (19) based on a laser beam irradiated downward from the laser altimeter (23) and reflected upward by the marine hose (1), and controlling the drone (19) to the altitude at which the wireless communication is possible between the communication unit (17) and the IC tag (11) based on the calculated altitude.

## Description

### Technical Field

The present invention relates to a system and a method for monitoring a marine hose using a drone.

### Background Art

Various methods for detecting the presence or absence of fluid leakage from a marine hose using a passive IC tag attached to the marine hose have been proposed (see, for example, Patent Document 1). In the method proposed in Patent Document 1, the IC tag receives a transmission radio wave transmitted from a communication unit outside the marine hose, and the communication unit receives a return radio wave transmitted by the IC tag in response to the transmission radio wave. Since pressure data by a pressure sensor installed in the marine hose is transmitted by the return radio wave, the presence or absence of the fluid leakage is determined based on the pressure data.

Patent Document 1 also proposes that the communication unit is installed in a drone (paragraph 0041). By installing the communication unit in the drone, the work of checking for fluid leakage is greatly reduced. The wireless communication distance between a passive IC tag and a communication unit is about one to two meters. Therefore, when performing this wireless communication, it is necessary to position the drone at an upper position close to the IC tag and hover the drone.

The altitude (height position) of the drone is calculated based on the pressure detected by the pressure altimeter installed in the drone. When the altitude of the drone is lowered and the drone is brought close to the IC tag, a downward airflow generated by a propeller of the drone is reflected by the marine hose or a water surface, and a disturbance occurs in the atmospheric pressure in the vicinity of the drone (the pressure altimeter). Accordingly, the altitude of the drone cannot be accurately calculated with the pressure detected by the pressure altimeter, and the altitude of the drone is calculated incorrectly. As a result, when the height position of the drone is controlled based on the pressure detected by the pressure altimeter, there is a problem that the drone cannot be positioned at the altitude at which wireless communication can be performed between the IC tag and the communication unit. Therefore, there is room for improvement in stably positioning the drone at an upper position close to the IC tag when performing wireless communication between the IC tag and the communication unit.

### Citation List

### Patent Literature

Patent Document 1: JP 2021-46929 A

### Summary of Invention

### Technical Problem

An object of the present invention is to provide a system and a method for monitoring capable of stably positioning a drone at an upper position close to an IC tag when performing wireless communication between a passive IC tag installed in a marine hose and a communication unit installed in the drone.

### Solution to Problem

A system for monitoring a marine hose according to the present invention to achieve the object described above is a system for monitoring a marine hose including:
an IC tag of a passive type installed in a marine hose of a floating type used in a state in which the marine hose floats on a water surface;
a drone in which a communication unit configured to perform wireless communication with the IC tag and a camera device are installed; and
a calculation device to which acquired data acquired by the communication unit from the IC tag through the wireless communication and image data by the camera device are input,
the calculation device being configured to determine presence or absence of leakage of fluid in the marine hose based on the acquired data,
a laser altimeter being further included, the laser altimeter being installed in the drone,
when the wireless communication is performed, altitude of the drone being calculated based on a laser beam irradiated downward by the laser altimeter and reflected upward by the marine hose, and
the drone being controlled to the altitude at which the wireless communication is possible based on the calculated altitude.

Another system for monitoring a marine hose according to the present invention is a system for monitoring a marine hose including:
an IC tag of a passive type installed in a marine hose of a floating type used in a state in which the marine hose floats on a water surface;
a drone in which a communication unit configured to perform wireless communication with the IC tag and a camera device are installed; and
a calculation device to which acquired data acquired by the communication unit from the IC tag through the wireless communication and image data by the camera device are input,
the calculation device being configured to determine presence or absence of leakage of fluid in the marine hose based on the acquired data,
a laser altimeter and a radar altimeter being further included, the laser altimeter and the radar altimeter being installed in the drone,
when the wireless communication is performed, altitude of the drone being calculated based on a laser beam irradiated downward by the laser altimeter and reflected upward by the marine hose and based on radar emitted downward by the radar altimeter and reflected upward, and
when the calculation device determines that the altitude of the drone calculated based on the laser beam is appropriate in light of a standard set in advance, the drone being controlled to the altitude at which the wireless communication is possible based on the altitude of the drone calculated based on the laser beam, and when the calculation device determines that the altitude of the drone calculated based on the laser beam is inappropriate in light of the standard, the drone being controlled to the altitude at which the wireless communication is possible based on the altitude of the drone calculated based on the radar.

A method for monitoring a marine hose according to the present invention is a method for monitoring a marine hose including:
by using an IC tag of a passive type installed in a marine hose of a floating type used in a state in which the marine hose floats on a water surface, a drone in which a communication unit configured to perform wireless communication with the IC tag and a camera device are installed, and a calculation device to which acquired data acquired by the communication unit from the IC tag through the wireless communication and image data by the camera device are input, determining presence or absence of leakage of fluid in the marine hose based on the acquired data by the calculation device,
installing a laser altimeter in the drone,
when performing the wireless communication, calculating altitude of the drone based on a laser beam irradiated downward by the laser altimeter and reflected upward by the marine hose, and
controlling the drone to the altitude at which the wireless communication is possible based on the calculated altitude.

Another method for monitoring a marine hose according to the present invention is a method for monitoring a marine hose including:
by using an IC tag of a passive type installed in a marine hose of a floating type used in a state in which the marine hose floats on a water surface, a drone in which a communication unit configured to perform wireless communication with the IC tag and a camera device are installed, and a calculation device to which acquired data acquired by the communication unit from the IC tag through the wireless communication and image data by the camera device are input, determining presence or absence of leakage of fluid in the marine hose by the calculation device based on the acquired data,
installing a laser altimeter and a radar altimeter in the drone such that when performing the wireless communication, altitude of the drone is calculated based on a laser beam irradiated downward by the laser altimeter and reflected upward by the marine hose and based on radar emitted downward by the radar altimeter and reflected upward, and
when the calculation device determines that the altitude of the drone calculated based on the laser beam is appropriate in light of a standard set in advance, controlling the drone to the altitude at which the wireless communication is possible based on the altitude of the drone calculated based on the laser beam, and when the calculation device determines that the altitude of the drone calculated based on the laser beam is inappropriate in light of the standard, controlling the drone to the altitude at which the wireless communication is possible based on the altitude of the drone calculated based on the radar.

### Advantageous Effects of Invention

According to the former system and method for monitoring of the present invention, the laser altimeter is used when the wireless communication is performed, and thus the vertical interval between the laser altimeter and the marine hose can be accurately grasped without being affected by the atmospheric pressure state in the vicinity of the drone. As a result, it is advantageous to control the drone at altitude at which the wireless communication is possible.

According to the latter system and method for monitoring of the present invention, the laser altimeter or the radar altimeter is used when the wireless communication is performed, and thus the vertical interval between the laser altimeter or the radar altimeter and the marine hose can be accurately grasped without being affected by the atmospheric pressure state in the vicinity of the drone. As a result, it is advantageous to control the drone at altitude at which the wireless communication is possible. Furthermore, the laser altimeter, which is easier to handle, is used for altitude control of the drone in preference to the radar altimeter, but when the calculation device determines that the altitude of the drone calculated based on the laser beam is inappropriate in light of a preset standard, the radar altimeter is used for the altitude control of the drone instead of the laser altimeter. Therefore, the drone can be controlled to an altitude at which the wireless communication is possible under substantially any circumstances.

### Brief Description of Drawings

FIG. 1 is an explanatory diagram illustrating an embodiment of a monitoring system.
FIG. 2 is an explanatory diagram illustrating an example of a portion of the marine hose in FIG. 1 enlarged in a longitudinal cross-sectional view.
FIG. 3 is an explanatory diagram illustrating part of the marine hose in a cross-sectional view taken along a line A-A of FIG. 2.
FIG. 4 is an explanatory diagram illustrating a detector of FIG. 2 enlarged in a longitudinal cross-sectional view.
FIG. 5 is an explanatory diagram illustrating a configuration of the monitoring system in which a calculation device and terminal devices are connected through a communication network.
FIG. 6 is an explanatory diagram illustrating a state in which altitude control of a drone is performed using a laser altimeter.
FIG. 7 is a graph schematically illustrating the altitude of the drone calculated using a pressure altimeter and the laser altimeter.
FIG. 8 is an explanatory diagram illustrating a part of another marine hose, on which an IC tag is installed, in a longitudinal cross-sectional view.
FIG. 9 is an explanatory diagram illustrating part of the marine hose in a cross-sectional view taken along a line B-B of FIG. 8.
FIG. 10 is an explanatory diagram illustrating the IC tag of FIG. 8 being enlarged in a state in which a soluble member is not dissolved, in which FIG. 10(A) is a plan view, and FIG. 10(B) is a cross-sectional view.
FIG. 11 is an explanatory diagram illustrating a state in which a part of the soluble member of FIG. 10 is dissolved, in which FIG. 11(A) is a plan view, and FIG. 11(B) is a cross-sectional view.
FIG. 12 is an explanatory diagram illustrating a modified example of the IC tag in a plan view in which the soluble member is not yet dissolved.
FIG. 13 is an explanatory diagram illustrating a state in which the soluble member in FIG. 12 is partially dissolved in a plan view.
FIG. 14 is an explanatory diagram illustrating a state in which the altitude control of the drone is performed using the laser altimeter in another embodiment of the monitoring system.
FIG. 15 is an explanatory diagram illustrating a state in which the altitude control of the drone is performed using a radar altimeter in the embodiment of a management system in FIG. 14.
FIG. 16 is a graph schematically illustrating the altitude of the drone calculated using the laser altimeter and the radar altimeter.

### Description of Embodiments

A system for monitoring a marine hose (hereinafter referred to as a monitoring system) and a monitoring method of the present invention will be described below, based on embodiments illustrated in the drawings.

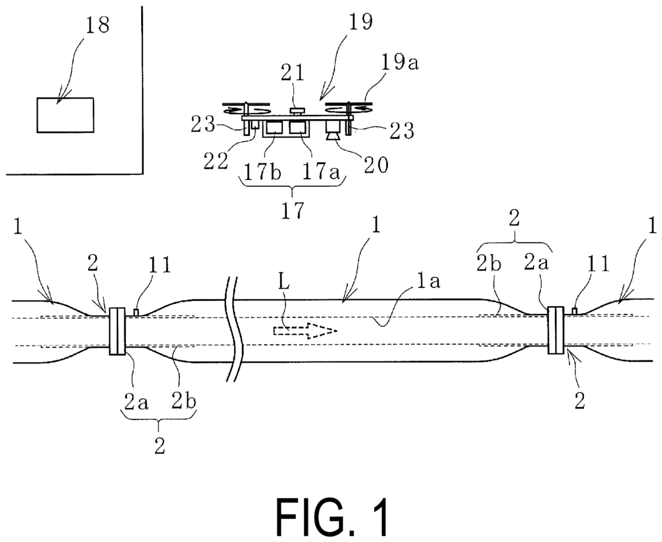

The monitoring system according to an embodiment illustrated in FIG. 1 is configured to determine the presence or absence of leakage of a fluid L in a floating type marine hose 1 used in a state where it floats on the water surface using a drone 19. The marine hose 1 is composed of a cylindrical hose body and connection fittings 2 connected to both ends of this hose body in the longitudinal direction. Each connection fitting 2 includes a nipple 2b extending in the longitudinal direction of the hose body and a flange 2a joined to the nipple 2b. The marine hoses 1 are connected to each other via the connection fittings 2, and usually about 10 marine hoses 1 are connected together for use.

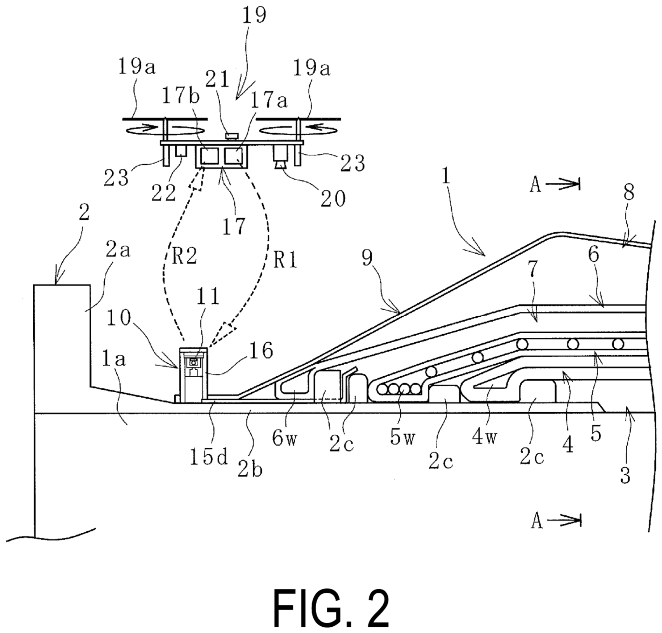

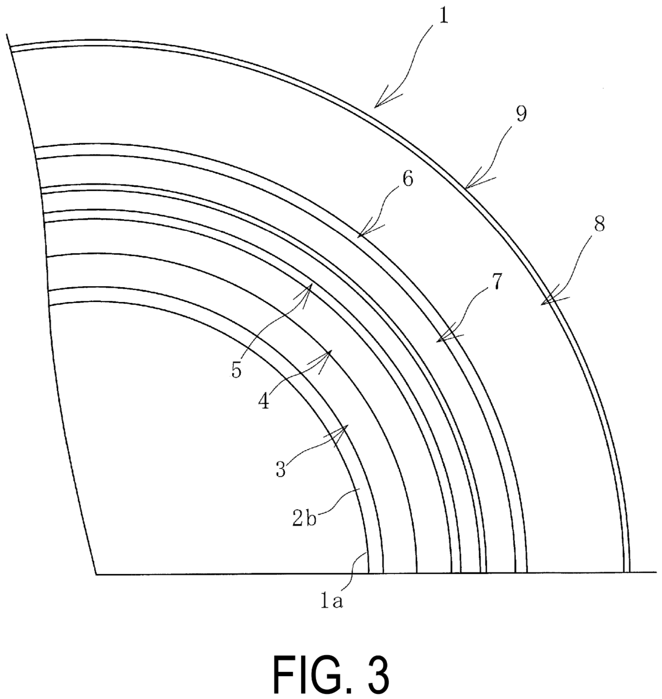

As illustrated in FIGS. 2 and 3, in the hose body of the marine hose 1, an inner surface layer 3, a first reinforcing layer 4, a body wire layer 5, a fluid retention layer 7, a second reinforcing layer 6, a buoyant layer 8, and an outer surface layer 9 are layered in order from the inner circumferential side toward the outer circumferential side. This marine hose 1 is of a double carcass type having the first reinforcing layer 4 and the second reinforcing layer 6 layered at a distance in the radial direction of the hose body with the fluid retention layer 7 interposed therebetween. Note that the body wire layer 5 can be discretionarily provided. The region on the inner circumferential side of the inner surface layer 3 serves as a flow path 1a for a fluid L. Examples of the fluid L include crude oil, heavy oil, gasoline, LPG, water, seawater, chemicals (alcohols refined from gasoline), and the like.

The inner surface layer 3 is made of a material appropriately selected depending on the type of the fluid L, and has excellent durability and erosion resistance against the fluid L. When the fluid L is crude oil, heavy oil, gasoline, or the like, the inner surface layer 3 is made of nitrile rubber or the like having excellent oil resistance.

Each of the first reinforcing layer 4 and the second reinforcing layer 6 is formed by layering a plurality of reinforcing cord layers, each of which has a large number of reinforcing cords arranged in parallel and covered with rubber. The body wire layer 5 is configured by spirally winding a metal wire around the outer circumferential surface of the first reinforcing layer 4 at predetermined intervals. The first reinforcing layer 4, the body wire layer 5, and the second reinforcing layer 6 are fixed to the nipples 2b at both end portions of the hose body using nipple wires 4w, 5w, and 6w at both end portions of the first reinforcing layer 4, the body wire layer 5, and the second reinforcing layer 6, fixing rings 2c protruding from the outer circumferential surfaces of the nipples 2b, and the like. The fluid retention layer 7 formed between the first reinforcing layer 4 and the second reinforcing layer 6 is a space for retaining the fluid L leaked from the flow path 1a.

The buoyant layer 8 is made of a material such as sponge rubber, polyurethane foam or the like that exhibits buoyancy to float the marine hose 1 above the sea. The outer surface layer 9 is made of a non-water-permeable material such as rubber, and has a highly visible reference line RL and the like marked on the surface thereof.

The monitoring system includes a detector 10 including a passive IC tag 11 installed in the marine hose, a calculation device 18, and the drone 19. A communication unit 17, a camera device 20, a GNSS receiver 21, a pressure altimeter 22, and a laser altimeter 23 are installed in the drone 19. As illustrated in FIG. 1, in this embodiment, the calculation device 18 is located at a location remote from the place where the marine hose 1 is used, and the communication unit 17 and the calculation device 18 are configured separately and independently. However, the communication unit 17 and the calculation device 18 may be configured to be integrated and installed in the drone 19.

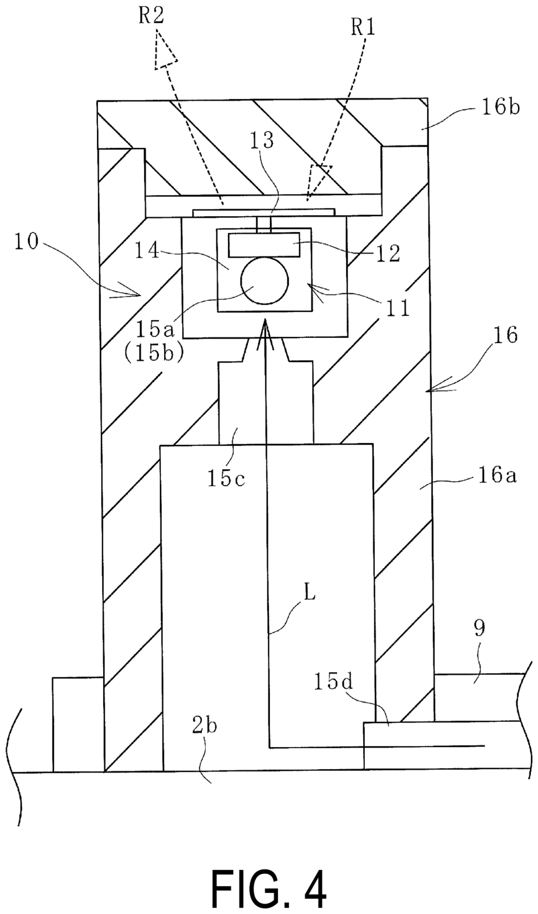

As illustrated in FIG. 4, the detector 10 includes the IC tag 11 and a sensor unit 15 connected to the IC tag 11. The IC tag 11 is positioned on the surface of the marine hose 1 and located above the water. The detector 10 is configured to detect a preset detection indicator ix inside the hose body. In this embodiment, this detection indicator ix is a pressure value between the inner surface layer 3 and the second reinforcing layer 6 (the fluid retention layer 7), and a pressure sensor 15a is used as the sensor unit 15. Then, in this monitoring system, the presence or absence of leakage of the fluid L from the flow path 1a is determined by the calculation device 18 based on this detection indicator ix.

The IC tag 11 includes an IC chip 12 and an antenna unit 13 connected to the IC chip 12. The pressure sensor 15a is connected to the IC tag 11 (the IC chip 12). The IC chip 12 optionally stores tag-specific information such as the identification number of the IC tag 11 and other necessary information. The IC tag 11 adopts commonly available specifications, and for example, an RFID tag can be used as the IC tag 11.

The IC tag 11 is preferably placed at an end portion of the marine hose 1 in the longitudinal direction. In this embodiment, the IC tag 11 is placed on the surface of the connection fitting 2 at one end portion of the hose body in the longitudinal direction (the outer circumferential surface of the nipple 2b). In detail, as illustrated in FIG. 4, the IC tag 11 and the pressure sensor 15a arranged on a substrate 14 are placed inside a casing 16. The casing 16 includes a cylindrical base portion 16a and a lid portion 16b attached to an upper end portion of the base portion 16a.

The base portion 16a is erected on the outer circumferential surface of the nipple 2b covered with the outer surface layer 9. The base portion 16a is formed of a metal such as stainless steel. The lid portion 16b is screwed with the upper end portion of the base portion 16a to watertightly seal the upper end opening, and the IC tag 11 and the pressure sensor 15a are located in a watertightly sealed internal space of the casing 16. The lid portion 16b is made of a material that transmits a transmission radio wave R1 and a return radio wave R2, and examples of such materials include polycarbonate, polyamide, and epoxy resin. The casing 16 (the lid portion 16b) may be colored, for example, orange, so as to be easily noticeable in the ocean.

A check valve 15c is provided in the lower portion of the internal space in which the IC tag 11 and the pressure sensor 15a are located. A communication pipe 15d communicating with the fluid retention layer 7 is connected to the lower end portion of the base portion 16a. Accordingly, the lower space of the base portion 16a communicates with the fluid retention layer 7, but the check valve 15c is interposed between the lower space of the base portion 16a and the internal space in which the IC tag 11 and the pressure sensor 15a are located, making this internal space a pressure holding chamber.

The check valve 15c allows only the flow of the fluid L and gas to the pressure holding chamber, and restricts the flow from the pressure holding chamber to the communication pipe 15d side. Thus, when the pressure value in the pressure holding chamber increases, this pressure state is maintained. A known check valve can be used as the check valve 15c.

The pressure sensor 15a detects the pressure value in the pressure holding chamber, and the detected pressure value is then input to the calculation device 18 as acquired data Dr by the communication unit 17. A known pressure sensor can be used as the pressure sensor 15a. The IC chip 12 and the pressure sensor 15a are suspended in the drawing, but the IC chip 12 and the pressure sensor 15a may be placed flat as the antenna unit 13.

As illustrated in FIG. 2, the communication unit 17 includes a radio wave transmission unit 17a and a radio wave reception unit 17b. The radio wave transmission unit 17a transmits the transmission radio wave R1 to the IC tag 11. The transmission radio wave R1 received by the antenna unit 13 generates power in the IC tag 11, which activates the IC tag 11. The IC tag 11 uses this power to transmit the return radio wave R2 through the antenna unit 13, and this return radio wave R2 is received by the radio wave reception unit 17b. Thus, wireless communication between the IC tag 11 and the communication unit 17 is performed by transmitting the return radio wave R2 in response to the transmission radio wave R1.

The communication unit 17 can employ commonly distributed specifications that allow wireless communication with a passive RFID tag. Since the passive IC tag 11 is used, the communication distance of the radio waves R1 and R2 between the IC tag 11 and the communication unit 17 is, for example, about one meter or more and two meters or less.

The camera device 20 acquires image data of the marine hose 1 from the airspace above the marine hose 1. As the camera device 20, various known digital cameras and the like that acquire image data Mr of still images or moving images can be employed.

The drone 19 includes a plurality of (for example, three to four) propellers 19a and can employ known specifications that allow the drone 19 to fly from a measurement base to a desired position and hover in a fixed position. Positional coordinates of the drone 19 are grasped in real time by the GNSS receiver 21, and the flight of the drone 19 is controlled by the calculation device 18.

The drone 19 can be flown to the desired position by an operator performing wireless control using a controller communicably connected to the calculation device 18. Inputting the positional coordinates of the desired position into a control unit of the drone 19 allows the drone 19 to fly from the measurement base to the desired position by automatic control operation.

A known computer is used as the calculation device 18, and the calculation device 18 executes various computational processing using the input data. The acquired data Dr by the communication unit 17 and the image data Mr by the camera device 20 are input to the calculation device 18.

The calculation device 18 has already received reference image data Mc that indicates a state in which the sound marine hose 1 is not twisted and extends linearly. The reference image data Mc may be image data actually photographed from the airspace above the marine hose 1, or data prepared from design data or the like. For example, an output means such as a monitor is connected to the calculation device 18.

The pressure altimeter 22 successively calculates the altitude (height position) of the drone 19 based on the detected pressure (atmospheric pressure). The calculated altitude of the drone 19 is successively input to the calculation device 18. Alternatively, the detected pressure data by the pressure altimeter 22 may be successively input to the calculation device 18, and the altitude of the drone 19 may be successively calculated by the calculation device 18 based on the detected pressure data input to the calculation device 18. Various known specifications can be used for the pressure altimeter 22.

The laser altimeter 23 irradiates downward with a laser beam at a pinpoint. The laser beam is reflected upward by the marine hose 1 and detected by the laser altimeter 23. The laser altimeter 23 successively calculates the altitude of the drone 19 based on the detected laser beam (time from irradiation to detection). The calculated altitude of the drone 19 is successively input to the calculation device 18. Alternatively, time data (time from irradiation to detection) of the laser beam detected by the laser altimeter 23 may be successively input to the calculation device 18, and the altitude of the drone 19 may be successively calculated by the calculation device 18 based on the input time data. Various known specifications can be used for the laser altimeter 23.

The laser beam is not substantially reflected upward even when the water surface is irradiated with the laser beam. Therefore, in order to calculate the altitude of the drone 19 by the laser altimeter 23, it is necessary to irradiate a portion of the marine hose 1 protruding above the water with the laser beam and reflect the laser beam upward. In this embodiment, two laser altimeters 23 are installed in the drone 19, but one or three laser altimeters 23 may be installed therein.

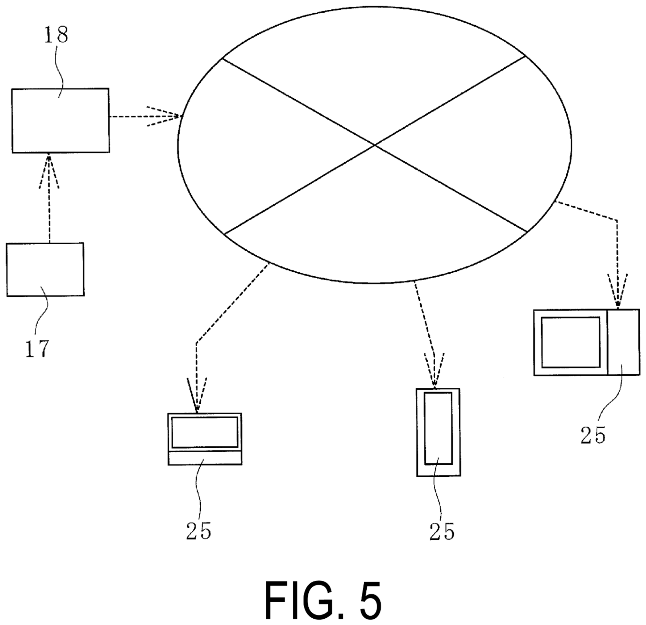

As illustrated in FIG. 5, the calculation device 18 is connected to desired terminal devices 25 via a communication network such as the Internet. For example, various pieces of information (data) can be transmitted from the calculation device 18 to the terminal devices 25 of relevant parties such as a control room of an operating company (user) of the marine hose 1, a sales company of the marine hose 1, or a manufacturing company, which are located remotely from the location where the marine hose 1 is used.

An example of a procedure for determining the presence or absence of leakage of the fluid L in the marine hose 1 using this embodiment of the monitoring system will be described below.

As illustrated in FIG. 1, the drone 19 is flown from a measurement base located, for example, on land or on a ship, and moved into the airspace above the marine hose 1. As described above, the drone 19 is moved from the measurement base to the airspace above the marine hose 1 by the wireless control by the operator or the automatic control operation.

When the drone 19 is moved from the measurement base to the airspace above the marine hose 1, the drone 19 is moved at an altitude of, for example, about 10 m or more and 20 m or less from the water surface. The altitude of the drone 19 during this movement is calculated using the pressure altimeter 22, and the altitude control of the drone 19 is performed by controlling the rotation speed of the propeller 19a based on the calculated altitude of the drone 19.

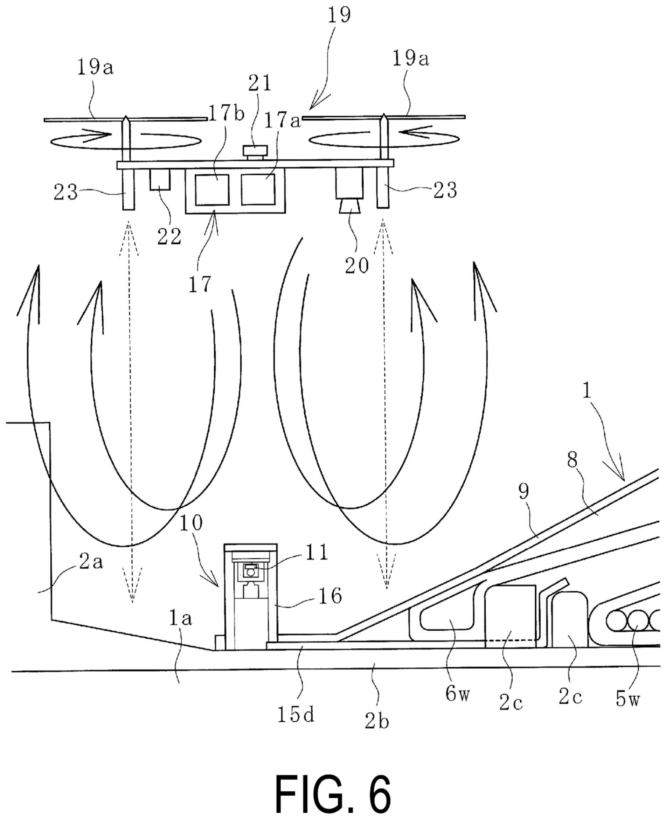

After the drone 19 is moved to the airspace above the marine hose 1, the drone 19 is moved downward to bring the communication unit 17 close to the IC tag 11 in order to perform wireless communication between the IC tag 11 and the communication unit 17. When the altitude of the drone 19 is lowered in this manner, as illustrated in FIG. 6, a downward airflow generated by the propeller 19a of the drone 19 is reflected by the marine hose 1 or the water surface, and the atmospheric pressure in the vicinity of the drone 19 (the pressure altimeter 22) is disturbed. Accordingly, the altitude of the drone 19 cannot be accurately calculated with the pressure detected by the pressure altimeter 22, and the altitude of the drone 19 is calculated incorrectly. The pressure altimeter 22 can correctly calculate the altitude of the drone 19 when the height of the drone 19 is, for example, five meters or more from the water surface.

Therefore, in this embodiment, when wireless communication is performed between the IC tag 11 and the communication unit 17, the altitude of the drone 19 is calculated using the laser altimeter 23 instead of the pressure altimeter 22. Based on this calculated altitude, the rotation speed of the propeller 19a of the drone 19 is controlled, and the drone 19 is controlled to the altitude at which wireless communication between the IC tag 11 and the communication unit 17 is possible.

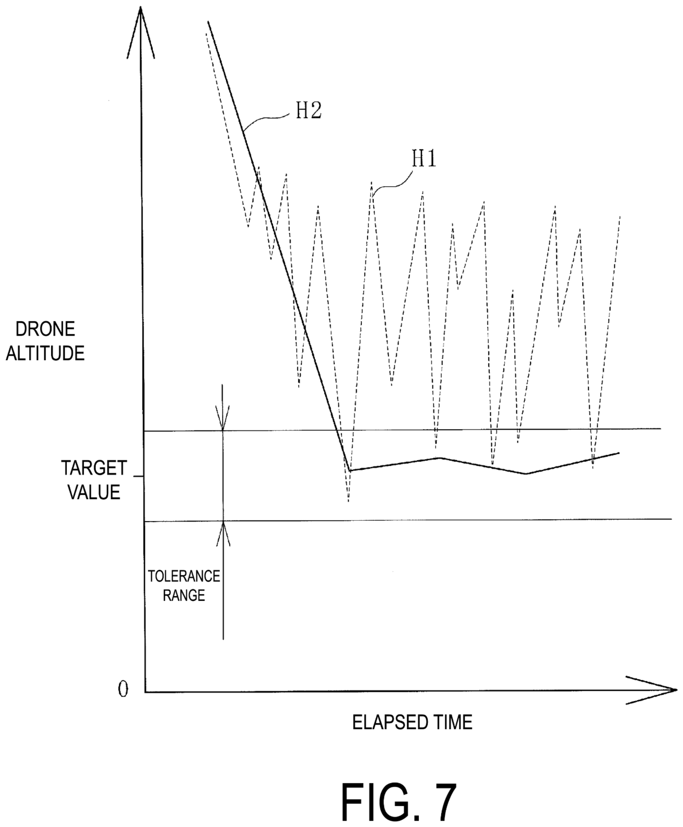

FIG. 7 illustrates a change over time in the altitude of the drone 19 calculated using each of the pressure altimeter 22 and the laser altimeter 23 when the drone 19 is moved downward and the communication unit 17 is brought close to the IC tag 11. H1 indicated by the dashed thin line and H2 indicated by the solid thick line are the altitudes of the drone 19 calculated using the pressure altimeter 22 and the laser altimeter 23, respectively.

Lowering the altitude of the drone 19 (that is, approaching the water surface) causes disturbance in the atmospheric pressure in the vicinity of the drone 19 (the pressure altimeter 22) as described above. Due to the disturbance of the atmospheric pressure, the altitude H1 calculated by using the pressure altimeter 22 greatly fluctuates, and correct altitude cannot be calculated. On the other hand, even when the altitude of the drone 19 is lowered, the altitude H2 of the drone 19 calculated using the laser altimeter 23 is not affected by the disturbance of the atmospheric pressure in the vicinity of the drone 19 (the pressure altimeter 22), and the correct altitude of the drone 19 can be calculated.

Therefore, in this embodiment, the altitude of the drone 19 is controlled based on the altitude H2 of the drone 19 calculated using the laser altimeter 23 such that a separation distance (vertical interval) between the IC tag 11 and the communication unit 17 is within a tolerance range in which wireless communication is possible. The tolerance range in which the IC tag 11 and the communication unit 17 can wirelessly communicate with each other is about ± 30 cm of a target value, where the target value of the vertical interval between the IC tag 11 and the communication unit 17 is, for example, one meter.

Specifically, when performing wireless communication between the IC tag 11 and the communication unit 17, the operator refers to the image data (image data of the marine hose 1 in a top view) acquired in real time by the camera device 20, and positions the drone 19 such that a portion of the marine hose 1 protruding above the water is irradiated with the laser beam. Then, the altitude control of the drone 19 is performed based on the altitude H2 of the drone 19 calculated successively using the laser altimeter 23, and the drone 19 is maintained within the tolerance range around the target value. Alternatively, the altitude of the drone 19 may be automatically controlled based on the altitude H2 of the drone 19 calculated successively using the laser altimeter 23, and the drone 19 may be maintained within the tolerance range around the target value.

According to this embodiment, when wireless communication is performed between the IC tag 11 and the communication unit 17, the laser altimeter 23 is used instead of the pressure altimeter 22, and thus the vertical interval between the laser altimeter 23 and the marine hose 1 can be accurately grasped without being affected by the atmospheric pressure state in the vicinity of the drone 19 (the pressure altimeter 22). As a result, it is advantageous to control the drone 19 to the altitude at which wireless communication between the IC tag 11 and the communication unit 17 is possible, and it is possible to stably position the drone 19 at an upper position close to the IC tag 11.

When a plurality of laser altimeters 23 are installed in the drone 19 at intervals in a plan view as in this embodiment, the probability that the laser beam of any of the laser altimeters 23 can be irradiated to the portion of the marine hose 1 protruding above the water increases, which is advantageous for reliably calculating the altitude of the drone 19 by the laser altimeter 23. A separation distance between adjacent laser altimeters 23 in a plan view is preferably one meter or more. Since the load borne by the drone 19 increases as the number of laser altimeters 23 increases, one or two laser altimeters 23 are preferably installed in the drone 19.

In an unexpected situation where the laser altimeter 23 cannot calculate the altitude of the drone 19 because, for example, the laser beam cannot be irradiated to the portion of the marine hose 1 protruding above the water or the like, the rotation speed of the propeller 19a is immediately increased to raise the drone 19 to the altitude (for example, five meters or more) at which the pressure altimeter 22 can calculate the correct altitude. Then, the altitude of the drone 19 is calculated successively by switching from the laser altimeter 23 to the pressure altimeter 22, and the drone 19 is returned to a state in which the altitude control of the drone 19 is performed based on this calculated altitude. After the drone 19 is prepared in this manner, the altitude of the drone 19 is successively calculated by switching from the pressure altimeter 22 to the laser altimeter 23 again, and the altitude control of the drone 19 is performed based on this calculated altitude, whereby the drone 19 is moved downward to bring the communication unit 17 close to the IC tag 11. Performing such altitude control of the drone 19 in an unexpected situation is advantageous in avoiding the risk of the drone 19 being submerged.

As described above, the altitude control of the drone 19 using the laser altimeter 23 brings the IC tag 11 and the communication unit 17 close to each other, and wireless communication between the IC tag 11 and the communication unit 17 is performed. That is, when the wireless communication is performed, the IC tag 11 is activated by the transmission radio wave R1 transmitted from the radio wave transmission unit 17a as illustrated in FIG. 2. The return radio wave R2 transmitted from the IC tag 11 in response to the transmission radio wave R1 is received by the radio wave reception unit 17b, and wireless communication between the IC tag 11 and the communication unit 17 is performed.

When the IC tag 11 is activated, the pressure value detected by the pressure sensor 15a as the detection result of the detection indicator ix by the detector 10 is transmitted from the IC tag 11 to the communication unit 17 by the return radio wave R2 and is input to the calculation device 18 as the acquired data Dr. The calculation device 18 determines the presence or absence of leakage of the fluid L from the flow path 1a as the internal state of the marine hose 1 due to the detection indicator ix based on the magnitude of the difference between the input acquired data Dr and preset reference data Dc.

Here, the internal pressure data in the fluid retention layer 7 in a sound state in which the fluid L does not leak from the flow path 1a is grasped in advance by performing a preliminary test or the like, and is set as the reference data Dc. When the fluid L leaking from the flow path 1a flows into the fluid retention layer 7, the internal pressure of the fluid retention layer 7 increases. Therefore, for example, the calculation device 18 determines that the fluid L leaks from the flow path 1a when the acquired data Dr exceeds a tolerance range of the reference data Dc (for example, 1.1 times or more the reference data Dc), and determines that the fluid L does not leak when the acquired data Dr is within this tolerance range. This tolerance range may be appropriately set based on the results of the preliminary test.

Further, as illustrated in FIG. 1, while the drone 19 is in the airspace above the marine hose 1, the camera device 20 acquires the image data Mr of the marine hose 1. It is preferable to acquire the image data Mr that covers the entire length of the marine hose 1 (hose body). The timing of acquiring the image data Mr may be before or after performing wireless communication between the IC tag 11 and the communication unit 17.

The calculation device 18 determines the external state of the marine hose 1 based on the difference between the acquired image data Mr and the preset reference image data Mc. For example, the contours of the hose bodies of the reference image data Mc and the image data Mr are compared, and the calculation device 18 determines the presence or absence of abnormal deformation of the marine hose 1.

A temperature sensor 15b may be used in addition to or instead of the pressure sensor 15a described above. That is, by using the temperature sensor 15b, the detection indicator ix is set to the temperature between the inner surface layer 3 and the second reinforcing layer 6 (the fluid retention layer 7). Then, the presence or absence of abnormal heating inside the marine hose 1 is grasped as the internal state of the marine hose 1 due to the detection indicator ix. The temperature sensor 15b may be located inside the casing 16 closer to the communication pipe 15d than the check valve 15c, or may be located inside the fluid retention layer 7. The calculation device 18 determines the presence or absence of abnormal heating of the inside the marine hose 1, as the internal state of the marine hose 1, based on the magnitude of the difference between the input acquired data Dr (the temperature data from the temperature sensor 15b) and the preset reference data Dc (the reference temperature data).

Various types of information (data) are transmitted from the calculation device 18 to each terminal device 25 via the communication network illustrated in FIG. 5. The information transmitted includes, for example, the acquired data Dr by the communication unit 17, the determination result from the calculation device 18 regarding the internal state of the marine hose due to the detection indicator ix, the image data Mr acquired by the camera device 20, and the determination result by the calculation device 18 regarding the external state of the marine hose 1.

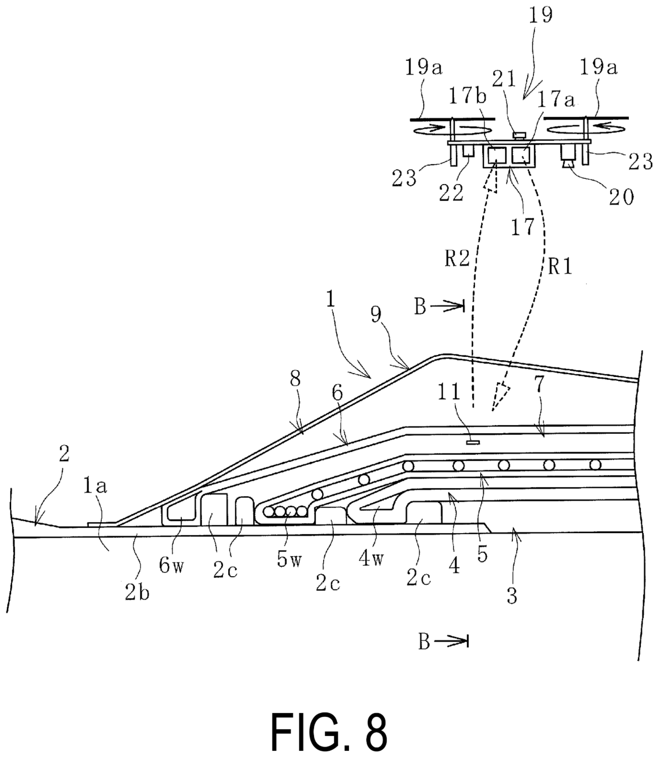

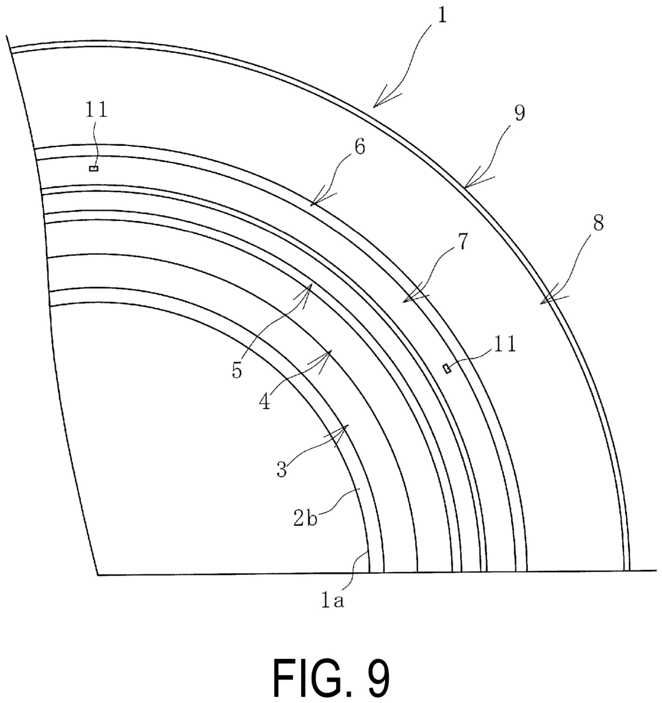

As illustrated in FIGS. 8 and 9, the IC tag 11 can be installed in the fluid retention layer 7 at a predetermined position in the longitudinal direction of the marine hose 1. The IC tag 11 is disposed in the fluid retention layer 7 in the process (molding process) of manufacturing the marine hose 1 and is fixed in the fluid retention layer 7 by vulcanization bonding or the like.

As illustrated in FIG. 9, a plurality of the IC tags 11 are preferably installed at predetermined positions in the longitudinal direction of the marine hose 1 at intervals in the circumferential direction of the marine hose 1. For example, three or more and six or less IC tags 11 are installed at one predetermined position in the longitudinal direction of the marine hose 1 at equal intervals in the circumferential direction.

The IC tag 11 may be installed only within a range to which the nipple 2b at the end portion in the longitudinal direction of the marine hose 1 extends, and in addition to this range, the IC tag 11 is preferably installed at a central portion or the like in the longitudinal direction of the marine hose 1, and installed at a plurality of positions spaced apart in the longitudinal direction.

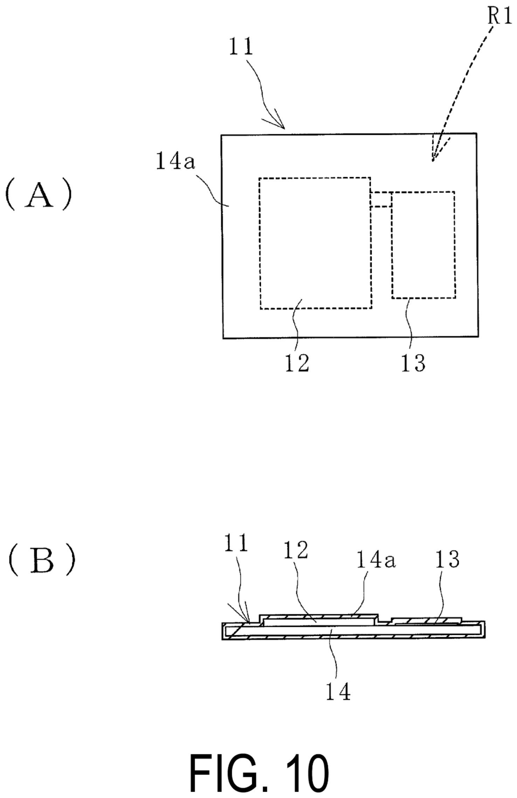

As illustrated in FIG. 10, the IC tag 11 includes the IC chip 12 and the antenna unit 13 disposed on the substrate 14, and a soluble member 14a covering the entire IC chip 12 and the antenna 13. In FIG. 10(B), the soluble member 14a is indicated by oblique lines.

The soluble member 14a starts to dissolve within, for example, one minute when the fluid L comes into contact with the soluble member 14a. In this embodiment, since the fluid L is refined oil, the soluble member 14a is formed of an oily coating material or the like that is dissolved by the refined oil. Further, the soluble member 14a has characteristics of blocking the passage of the transmission radio wave R1 and the return radio wave R2.

In this embodiment, the IC chip 12 stores position identification information for identifying the installation position (the position in the longitudinal direction or the positions in the longitudinal direction and the circumferential direction) of the IC tag 11 on the marine hose 1. Then, the position identification information is transmitted to the radio wave reception unit 17b via the return radio wave R2. For example, information such as the specification information and the manufacturing information of the marine hose 1, the installation time of the IC tag 11 on the marine hose 1, or the like may be stored in the IC chip 12, and the information may be transmitted.

Hereinafter, an example of a procedure for determining whether the fluid L is leaking from the flow path 1a using this monitoring system will be described.

The method of controlling the drone 19 to the altitude at which wireless communication is possible between the IC tag 11 and the communication unit 17 is as described above. Then, with the IC tag 11 and the communication unit 17 being brought into close proximity by altitude control of the drone 19, the transmission radio wave R1 is transmitted from the radio wave transmission unit 17a toward an appropriate range above the water of the marine hose 1 (the range where the IC tag 11 is embedded). When the fluid L does not flow into the fluid retention layer 7, the soluble member 14a is not dissolved by the fluid L as illustrated in FIG. 10, and the transmission radio wave R1 is blocked by the soluble member 14a. As a result, the radio wave reception unit 17b receives no return radio wave R2 (the return radio wave R2 cannot be received), or the return radio wave R2 becomes weak.

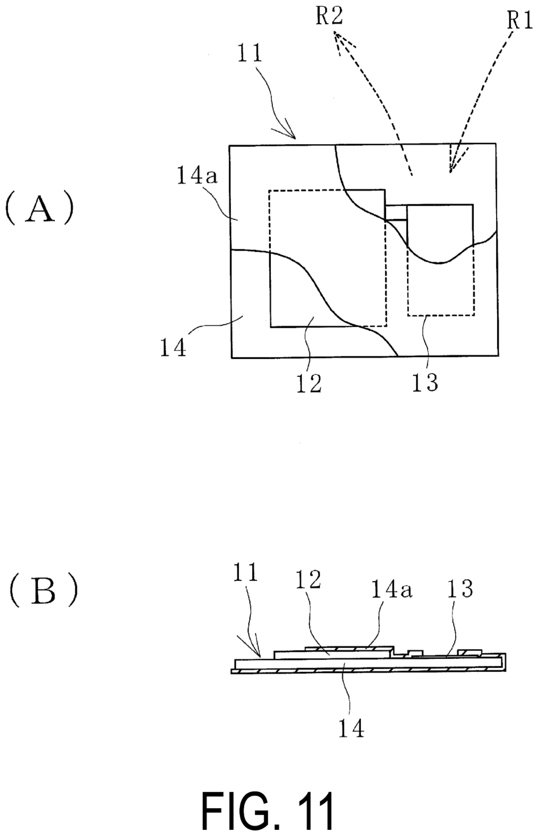

On the other hand, when the fluid L flows into the fluid retention layer 7 from the flow path 1a and the IC tag 11 (the soluble member 14a) is surrounded by or immersed in the fluid L, at least a part of the soluble member 14a is dissolved by the fluid L as illustrated in FIG. 11. In FIG. 11(B), the soluble member 14a is indicated by oblique lines.

As the soluble member 14a is dissolved, the return radio wave R2 is transmitted from the IC tag 11 in response to the transmission radio wave R1, or the return radio wave R2 becomes stronger (the output becomes larger). That is, the radio wave reception unit 17b can receive the return radio wave R2, or the return radio wave R2 becomes stronger. In the radio wave reception unit 17b, the strength of the return radio wave R2 is displayed as a numerical value, for example.

Therefore, by setting a reference value C that can be regarded as the normal state of the strength of the return radio wave R2 received by the radio wave reception unit 17b, when the strength of the return radio wave R2 received by the radio wave reception unit 17b is equal to or greater than the reference value C, it is determined that the fluid L has flowed into the fluid retention layer 7. When the strength is less than the reference value C, it is determined that the fluid L has not flowed into the fluid retention layer 7. The reference value C is set to an appropriate value based on the results of the preliminary test, and the like. By comparing the strength of the return radio wave R2 received by the radio wave reception unit 17b with the reference value C by the calculation device 18, whether the fluid L has leaked from the flow path 1a can be automatically determined.

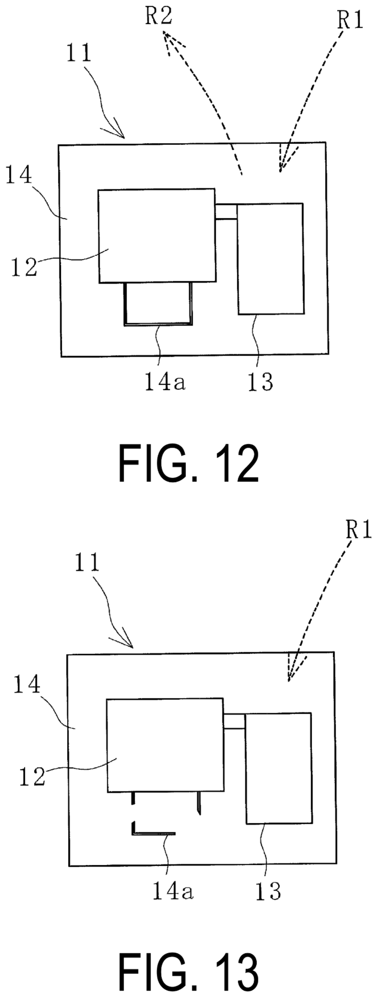

At least a part of a circuit of the IC chip 12 illustrated in FIG. 12 is formed by the soluble member 14a. Not only the circuit of the IC chip 12 but also at least a part of a circuit (including detection elements and the like) constituting the IC tag 11 may be formed by the soluble member 14a.

When the fluid L does not flow into the fluid retention layer 7, the IC tag 11 functions normally when the radio wave transmission unit 17a transmits the transmission radio wave R1, because the circuit formed by the soluble member 14a is not dissolved by the fluid L as illustrated in FIG. 12. Therefore, in the radio wave reception unit 17b, the strength of the return radio wave R2 is displayed as a numerical value, for example.

On the other hand, when the fluid L flows into the fluid retention layer 7 from the flow path 1a and the IC tag 11 is surrounded by or immersed in the fluid L, at least a part of the circuit 14a is dissolved by the fluid L as illustrated in FIG. 13, and the IC tag 11 itself is destroyed. Accordingly, the return radio wave R received by the radio wave reception unit 17b cannot be received.

Therefore, by knowing in advance the strength of the output value of the radio wave R2 received by the radio wave reception unit 17b from the IC tag 11 when the marine hose 1 is in a normal state in which no fluid L is leaking from the flow path 1a, if the strength of the return radio wave R2 received by the radio wave reception unit 17b is less than the reference value C, it is determined that the fluid L has flowed into the fluid retention layer 7. If the strength is equal to or greater than the reference value C, it is determined that the fluid L has not flowed into the fluid retention layer 7. The reference value C is set to an appropriate value based on the results of the preliminary test, and the like.

In each embodiment described above, the position identification information for identifying the installation position of the IC tag 11 on the marine hose 1 is transmitted via the radio wave R2 transmitted from the IC tag 11. Therefore, by analyzing the radio wave R2 (the position identification information) received by the radio wave reception unit 17b, it becomes easier to more reliably identify the position where the fluid L is leaking.

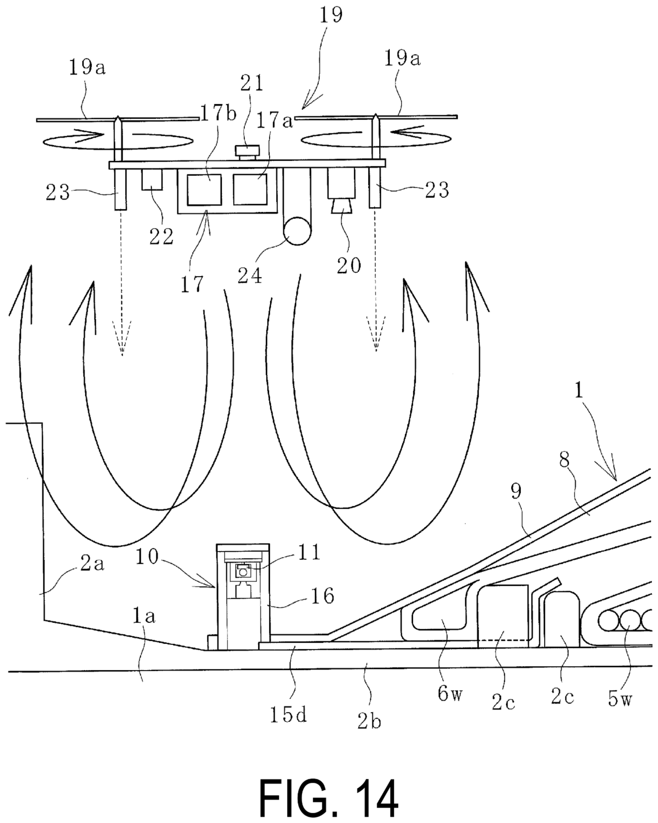

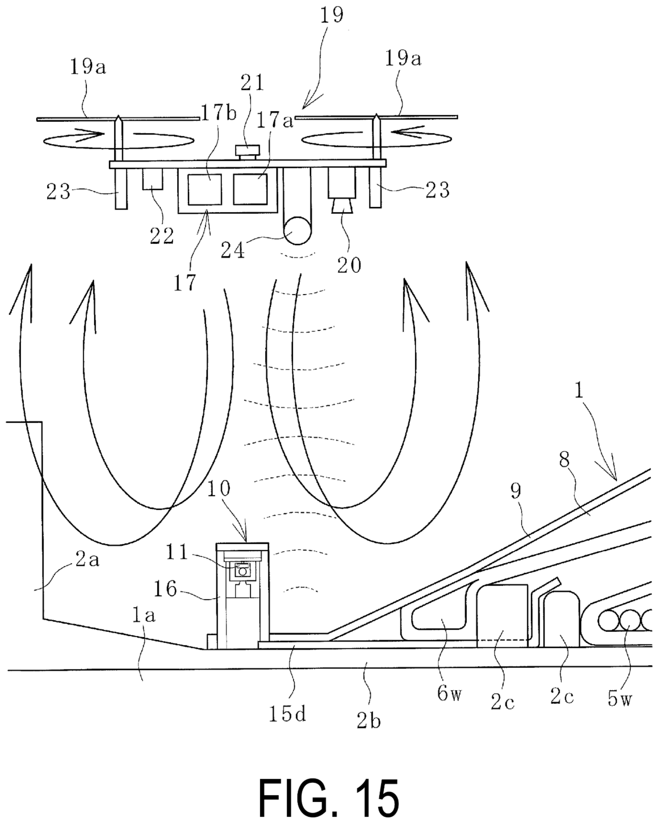

Another embodiment of the monitoring system illustrated in FIGS. 14 and 15 is different from the previous embodiment in that a radar altimeter 24 is additionally installed in the drone 19, and other configurations are substantially the same. Therefore, the differences will be described below.

As illustrated in FIG. 15, the radar altimeter 24 emits radar downward. The radar is reflected upward by the water surface or the marine hose 1 and detected by the radar altimeter 24. The radar altimeter 24 successively calculates the altitude of the drone 19 based on the detected radar (time from emission to detection). The calculated altitude of the drone 19 is successively input to the calculation device 18. Alternatively, time data (time from emission to detection) caused by the radar detected by the radar altimeter 24 may be successively input to the calculation device 18, and the altitude of the drone 19 may be successively calculated by the calculation device 18 based on the input time data. Since the radar is reflected upward even when the radar is emitted on the water surface, the radar altimeter 24 can accurately calculate the altitude of the drone 19 at substantially any place. Various known specifications can be used for the radar altimeter 24.

As illustrated in FIG. 14, when wireless communication is performed between the IC tag 11 and the communication unit 17, first, the calculation device 18 determines whether the altitude of the drone 19 calculated based on the laser beam of the laser altimeter 23 is appropriate in light of a standard S set in advance. In this standard S, for example, when the laser altimeter 23 cannot successively detect the laser beam reflected upward from the marine hose 1 (when the altitude of the drone 19 cannot be successively calculated), the altitude of the drone 19 calculated based on the laser beam of the laser altimeter 23 is defined as inappropriate, and when the altitude of the drone 19 is successively calculated by the laser altimeter 23, the altitude of the drone 19 calculated based on the laser beam of the laser altimeter 23 is defined as appropriate.

When it is determined that the altitude of the drone 19 calculated based on the laser beam is appropriate in light of the standard S, the altitude control of the drone 19 is performed based on the altitude of the drone 19 calculated based on the laser beam. Thus, the IC tag 11 and the communication unit 17 are brought close to each other to perform wireless communication between the IC tag 11 and the communication unit 17.

On the other hand, when the calculation device 18 determines that the altitude of the drone 19 calculated based on the laser beam is inappropriate in light of the standard S, the radar altimeter 24 is used for the altitude control of the drone 19 as illustrated in FIG. 15. That is, the altitude control of the drone 19 is performed based on the altitude of the drone 19 calculated based on the radar of the radar altimeter 24. Thus, the IC tag 11 and the communication unit 17 are brought close to each other to perform wireless communication between the IC tag 11 and the communication unit 17.

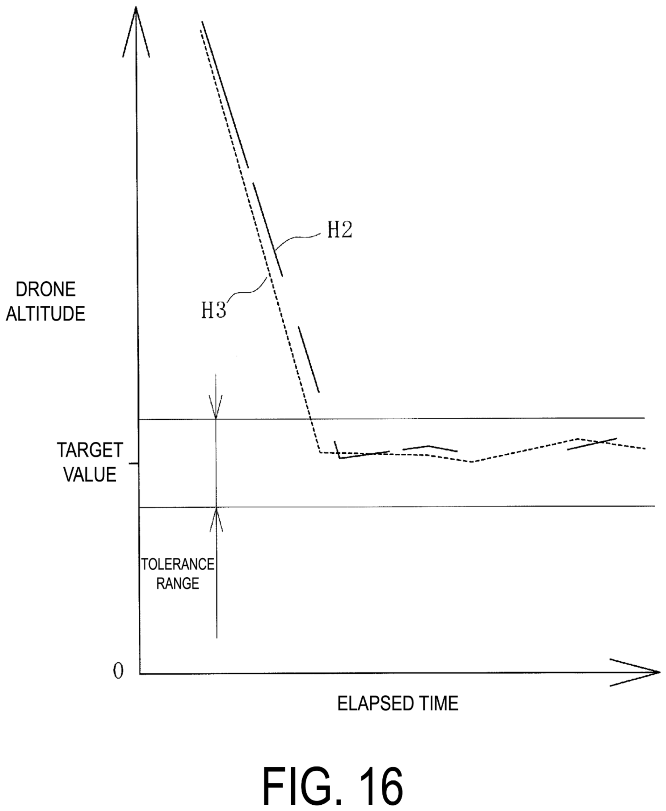

FIG. 16 illustrates a change over time in the altitude of the drone 19 calculated using each of the laser altimeter 23 and the radar altimeter 24 when the drone 19 is moved downward and the communication unit 17 is brought close to the IC tag 11 in an environment where fog is generated. H2 indicated by the solid bold line and H3 indicated by the dashed bold line are altitudes of the drone 19 calculated using the laser altimeter 23 and the radar altimeter 24, respectively.

Lowering the altitude of the drone 19 (that is, approaching the water surface) causes disturbance in the atmospheric pressure in the vicinity of the drone 19 (the pressure altimeter 22). Even when the altitude of the drone 19 is lowered under normal circumstances, the altitudes H2 and H3 of the drone 19 calculated using the laser altimeter 23 and the radar altimeter 24 are not affected by the disturbance of the atmospheric pressure in the vicinity of the drone 19 (the pressure altimeter 22), and the correct altitude of the drone 19 can be calculated.

Therefore, according to this embodiment, when wireless communication is performed between the IC tag 11 and the communication unit 17, the laser altimeter 23 or the radar altimeter 24 is used instead of the pressure altimeter 22, and thus the vertical interval between the laser altimeter 23 or the radar altimeter 24 and the marine hose 1 can be accurately grasped without being affected by the atmospheric pressure state in the vicinity of the drone 19. As a result, it is advantageous to control the drone 19 to the altitude at which wireless communication is possible.

However, in an environment where fog or spray is generated between the marine hose 1 and the drone 19, an environment where the marine hose 1 cannot be irradiated with a laser beam from the laser altimeter 23, or the like, the altitude of the drone 19 may not be successively calculated by the laser altimeter 23. That is, as illustrated in FIG. 16, the altitude H2 may be intermittently calculated and may not be calculated successively.

Therefore, in this embodiment, the laser altimeter 23, which is easier to handle, is used for the altitude control of the drone 19 in preference to the radar altimeter 24, but when the calculation device 18 determines that the altitude of the drone 19 calculated using the laser altimeter 23 is inappropriate in light of the standard S set in advance, the radar altimeter 24 is used for the altitude control of the drone 19 instead of the laser altimeter 23. As a result, it is advantageous to control the drone 19 to the altitude at which wireless communication between the IC tag 11 and the communication unit 17 is possible under substantially any circumstances, and it is possible to stably position the drone 19 at an upper position close to the IC tag 11.

### Reference Signs List

1 Marine hose
1a Flow path
2 Connection fitting
2a Flange
2b Nipple
2c Fixing ring
3 Inner surface layer
4 First reinforcing layer
4A to 4H Reinforcing cord layer
4w Nipple wire
5 Body wire layer
5w Nipple wire
6 Second reinforcing layer
6w Nipple wire
7 Fluid retention layer
8 Buoyant layer
9 Outer surface layer
10 Detector
11 IC tag
12 IC chip
13 Antenna unit
14 Substrate
14a Soluble member
15 Sensor unit
15a Pressure sensor
15b Temperature sensor
15c Check valve
15d Communication pipe
16 Casing
16a Base portion
16b Lid portion
17 Communication unit
17a Radio wave transmission unit
17b Radio wave reception unit
18 Calculation device
19 Drone
19a Propeller
20 Camera device
21 GNSS receiver
22 Pressure altimeter
23 Laser altimeter
24 Radar altimeter
25 Terminal device

## Claims

1. A system for monitoring a marine hose comprising:
an IC tag of a passive type installed in a marine hose of a floating type used in a state in which the marine hose floats on a water surface;
a drone in which a communication unit configured to perform wireless communication with the IC tag and a camera device are installed; and
a calculation device to which acquired data acquired by the communication unit from the IC tag through the wireless communication and image data by the camera device are input,
the calculation device being configured to determine presence or absence of leakage of fluid in the marine hose based on the acquired data,
a laser altimeter being further included, the laser altimeter being installed in the drone,
when the wireless communication is performed, altitude of the drone being calculated based on a laser beam irradiated downward by the laser altimeter and reflected upward by the marine hose, and
the drone being controlled to the altitude at which the wireless communication is possible based on the calculated altitude.

2. A system for monitoring a marine hose comprising:
an IC tag of a passive type installed in a marine hose of a floating type used in a state in which the marine hose floats on a water surface;
a drone in which a communication unit configured to perform wireless communication with the IC tag and a camera device are installed; and
a calculation device to which acquired data acquired by the communication unit from the IC tag through the wireless communication and image data by the camera device are input,
the calculation device being configured to determine presence or absence of leakage of fluid in the marine hose based on the acquired data,
a laser altimeter and a radar altimeter being further included, the laser altimeter and the radar altimeter being installed in the drone,
when the wireless communication is performed, altitude of the drone being calculated based on a laser beam irradiated downward by the laser altimeter and reflected upward by the marine hose and based on radar emitted downward by the radar altimeter and reflected upward, and
when the calculation device determines that the altitude of the drone calculated based on the laser beam is appropriate in light of a standard set in advance, the drone being controlled to the altitude at which the wireless communication is possible based on the altitude of the drone calculated based on the laser beam, and when the calculation device determines that the altitude of the drone calculated based on the laser beam is inappropriate in light of the standard, the drone being controlled to the altitude at which the wireless communication is possible based on the altitude of the drone calculated based on the radar.

3. The system for monitoring a marine hose according to claim 1 or 2, wherein a plurality of the laser altimeters are installed in the drone at intervals in a plan view.

4. A method for monitoring a marine hose comprising:
by using an IC tag of a passive type installed in a marine hose of a floating type used in a state in which the marine hose floats on a water surface, a drone in which a communication unit configured to perform wireless communication with the IC tag and a camera device are installed, and a calculation device to which acquired data acquired by the communication unit from the IC tag through the wireless communication and image data by the camera device are input, determining presence or absence of leakage of fluid in the marine hose based on the acquired data by the calculation device,
installing a laser altimeter in the drone,
when performing the wireless communication, calculating altitude of the drone based on a laser beam irradiated downward by the laser altimeter and reflected upward by the marine hose, and
controlling the drone to the altitude at which the wireless communication is possible based on the calculated altitude.

5. A method for monitoring a marine hose comprising:
by using an IC tag of a passive type installed in a marine hose of a floating type used in a state in which the marine hose floats on a water surface, a drone in which a communication unit configured to perform wireless communication with the IC tag and a camera device are installed, and a calculation device to which acquired data acquired by the communication unit from the IC tag through the wireless communication and image data by the camera device are input, determining presence or absence of leakage of fluid in the marine hose by the calculation device based on the acquired data,
installing a laser altimeter and a radar altimeter in the drone such that when performing the wireless communication, altitude of the drone is calculated based on a laser beam irradiated downward by the laser altimeter and reflected upward by the marine hose and based on radar emitted downward by the radar altimeter and reflected upward, and
when the calculation device determines that the altitude of the drone calculated based on the laser beam is appropriate in light of a standard set in advance, controlling the drone to the altitude at which the wireless communication is possible based on the altitude of the drone calculated based on the laser beam, and when the calculation device determines that the altitude of the drone calculated based on the laser beam is inappropriate in light of the standard, controlling the drone to the altitude at which the wireless communication is possible based on the altitude of the drone calculated based on the radar.
